# EUROPEAN PATENT SPECIFICATION

(11) **EP 2 853 968 B1**
(45) Date of publication and mention of the grant of the patent: **08.05.2019**
(21) Application number: 13186363.1
(22) Date of filing: 27.09.2013
(51) Int. Cl.: G05B 23/02

(54) **An alarm management system and a method thereof**
Alarmverwaltungssystem und Verfahren dafür
Système de gestion d'alarme et procédé associé

(43) Date of publication of application: 01.04.2015
(73) Proprietor: Siemens Aktiengesellschaft, 80333 München (DE)
(72) Inventor: Diwakar, Rajendran, 5600078 Bangalore (IN); N, Aravind, 560070 Bangalore (IN)
(74) Representative: Isarpatent

(56) References cited:
- US-A1- 2002 077 711
- US-A1- 2010 082 125
- US-A1- 2010 289 638
- US-B1- 6 941 557
- Gabriel Jakobson, Mark Weissman: "Alam Correlation. Correlating multiple network alarms improves telecommunications network surveillance and fault management", IEEE Network , 1 November 1993 (1993-11-01), pages 52-59, XP055089409, Retrieved from the Internet: URL:http://www.macs.hw.ac.uk/~dwcorne/RSR/ eventcorr.pdf [retrieved on 2013-11-20]

## Description

The present invention generally relates to control systems and more particularly, to an alarm management system and a method therefor.

Alarm management systems are widely used in conjunction with various control systems used in a wide variety of application areas, particularly, in technical installations such as industrial automation systems. Such industrial automation systems usually include one or more human-machine interface devices to display and control process data related to industrial equipment. Therefore, the industrial equipments represent a controlled system executing a controlled process while the industrial automation system represents a control system. The industrial automation system regulating controlled systems / processes in an industrial plant is just one example of various control systems conducive to the application of the present invention. Another prominent example is building technologies wherein several control systems are deployed for regulating various environmental parameters related to a building as well as security and surveillance thereof.

Human-machine interface devices act as important aids for operating personnel to interact with the control system. To this end the human-machine interface device generally has specific hardware, e.g. a touch-screen and specific software is also operated therein. This provides functions, which enhance user-friendliness, quality and safety of operation by an operator. Thus, human-machine interface devices can be used to visualize, control, configure, and generate interactive process maps related to the industrial equipment. On the one hand, this allows the selective display of responses of the industrial equipment, generally in the form of measured values and messages. On the other hand, the customized pre-definition of control operations and data inputs allows the industrial equipment to be switched to required states. It should be noted that the term human-machine interface device is a generic term covering all components associated with this group of devices, which can be stationary or mobile.

An important technical feature of various control systems is to provide an alarm management system. The alarm management system serves to alert an operator whenever a control parameter being regulated through the control system breaches a stipulated boundary condition.

The performance of an alarm management system is gauged, among other parameters, based on metrics such as maximum manageable alarms per operator per unit time, timely remediation of alarm conditions, and so on.

In the state-of-the-art, various alarm management systems and methods have been proposed but each available alarm management system and method suffers for one or another limitation. In general, the state-of-the-art alarm management techniques require an operator to have *a priori* knowledge about various control parameters that should be investigated for remediation of any given alarm condition. This necessitates significant amount of training and knowledge transfer before an operator may be assigned on-field responsibility. Moreover, the operator should not only be knowledgeable about various control parameters that need to be investigated but she/he should also be familiar with various user interfaces deployed on a human-machine interface device and individual control parameters provided therein. Over a prolonged period of time, while the operator may become familiar with placement of various control parameters on numerous user interfaces provided in the human-machine interface device, it still is a time-consuming task to navigate to individual user interfaces and alter the relevant control parameter provided therein. It is needless to mention that in case of time critical alarms, such time is of essence and the remediation actions should be performed in the fastest manner possible.

The state-of-the-art alarm management techniques further suffer from information overflow and alarm flooding often confusing the operator. In such case, some critical alarms may get obscured by hundreds of other alarms and hence, missed by the operator.

US 2002/077711 A1 discloses a coordinated system that uses multiple types of data from different and divergent data sources to assist in and enhance asset utilization in a process control plant or environment. An integrated alarm application may produce user displays which provide information on the received alarms, provide an alarm banner integrating the alarms, etc. Each alarm in the alarm banner may also include an information button which may be selected by a user to generate a pop-up window containing more detailed information relating to the particular alarm. The alarm banner may provide another pop-up window which displays one or more response categories which may facilitate the user's understanding of how a particular alarm should be addressed and within what time frame the alarm should be addressed. For example, the pop-up window may indicate that a particular device is no longer communicating, that the device has failed, that the device needs maintenance immediately, or that the device requires maintenance or some other attention soon as response categories.

The article titled Alarm Correlation discusses correlating multiple network alarms in a telecommunication network to improve telecommunications network surveillance and fault management. Alarm correlation is conceptual interpretation of multiple alarms to assign new meaning to alarms. The alarm correlation assist in reduction in multiple occurences of an alarm into a single alarm, substitution of a specified number of occurences of alarms with a new alarm, inhibiting a low priority alarm in presence of a high priority alarm, substitution of a set of alarms satisfying a Boolean pattern with a new alarm and reference to an alarm by its superclass.

In light of the foregoing, there is a need for an alarm management system and method that facilitates easy handling of alarms while reducing dependence of manual training and skill development of individual operators.

It is therefore an object of the present invention to provide an alarm management system and a method therefor to facilitate efficient and convenient remediation of alarms conditions occurring in a control system.

The object is achieved by providing a system according to claim 1 and a method for operating the same according to claim 8. Further embodiments of the present invention are addressed in respective dependent claims.

The underlying concept of the present invention is to correlate one or more control parameters are required to address an individual alarm condition and making these control parameters easily accessible and editable directly from an alarm display interface used to display alarm messages to an operator of the alarm management system. The alarm management system and method of the present invention implement a self-learning technique wherein the correlation between the control parameters and the alarm conditions is dynamically updated based on actual operator actions in response to an alarm condition in the control system. On one hand, the present invention facilitates reducing dependence on manual training and skill development of individual operators because the alarm management system and the method of the present invention provides a list of control parameters that should be acted on in order to remediate the alarm condition; on that other hand, the techniques of the present invention aids in time efficient remediation of various alarm conditions since the control parameters that need to be regulated to remediate the alarm condition are directly accessible from the alarm display interface; and hence, the operator does not need to navigate through myriad of user interfaces while searching for relevant control parameters to act on.

In a first aspect of the present invention, an alarm management system suitable for use in a control system is provided. The control system is configured for regulating one or more control parameters corresponding to at least one controlled system and/or controlled process in a technical installation. The control system is further configured for generating one or more alarm messages, wherein each alarm message is assigned an alarm code selected from a set of predefined alarm codes. The alarm management system comprises a correlation module and a rendering module. The correlation module is configured for maintaining a remedial parameter map corresponding to at least one alarm code, the remedial parameter map being a set of control parameters. The rendering module is configured for receiving at least one alarm message from the control system, and rendering the alarm message, along with a corresponding remedial parameter map, in an alarm display interface.

In a second aspect of the present invention, a method for alarm management suitable for use in a control system, as described in first aspect of the present invention, is provided. Initially, a remedial parameter map corresponding to at least one alarm code is maintained, the remedial parameter map being a set of control parameters. During operation, at least one alarm message is received from the control system, and rendered, along with a corresponding remedial parameter map, in an alarm display interface.

Accordingly, the present invention provides an alarm management system and a method therefor that facilitates efficient and convenient remediation of alarm conditions in a control system.

The present invention is further described hereinafter with reference to illustrated embodiments shown in the accompanying drawings, in which:
- FIG 1: illustrates a schematic view of an alarm management system in accordance with an embodiment of the present invention,
- FIG 2: illustrates a schematic view of an alarm display interface in accordance with an embodiment of the present invention,
- FIG 3: illustrates a brief flowchart for a method for operating an alarm management system in accordance with an embodiment of the present invention, and
- FIGS 4A-4C: illustrate a detailed flowchart for a method for operating an alarm management system in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

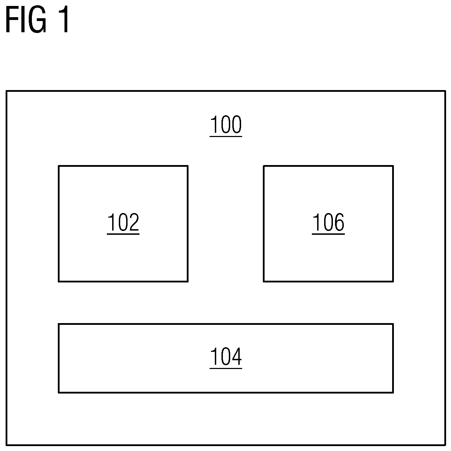

Referring now to FIG 1, a schematic view of an alarm management system 100 is shown in accordance with an embodiment of the present invention.

The alarm management system 100 includes a correlation module 102, a rendering module 104, and a tracking module 106.

The alarm management system 100 is suitable for use in conjunction with a control system. Various control systems in which the alarm management system 100 of the present invention may be used are already indicated in the foregoing description. In general, the alarm management system 100 of the present invention may be used in industrial automation system, building automation systems, and so on.

As explained earlier, the control systems are configured for regulating one or more control parameters corresponding to at least one controlled system and/or controlled process in a technical installation. The control system is further configured for generating one or more alarm messages.

The alarm management system 100 is configured to handle the alarm messages in such a manner as to provide efficient and convenient remediation thereof.

In accordance with various techniques of the present invention, it is contemplated that each alarm message generated in the control system is assigned an alarm code selected from a set of predefined alarm codes. It should be noted that the control system will generally be configured to generate a finite types of alarms. While the actual number of alarm messages may run into hundreds or thousands or more over a given time period of operation of the control system. The numerous alarms may be mapped to a finite number of types of alarm; each type of alarm can be represented using a distinct alarm code. In the parlance of object-oriented programming, alarm codes are to alarm messages what classes are to objects. For any given alarm code, multiple alarm messages may be generated at different time instances.

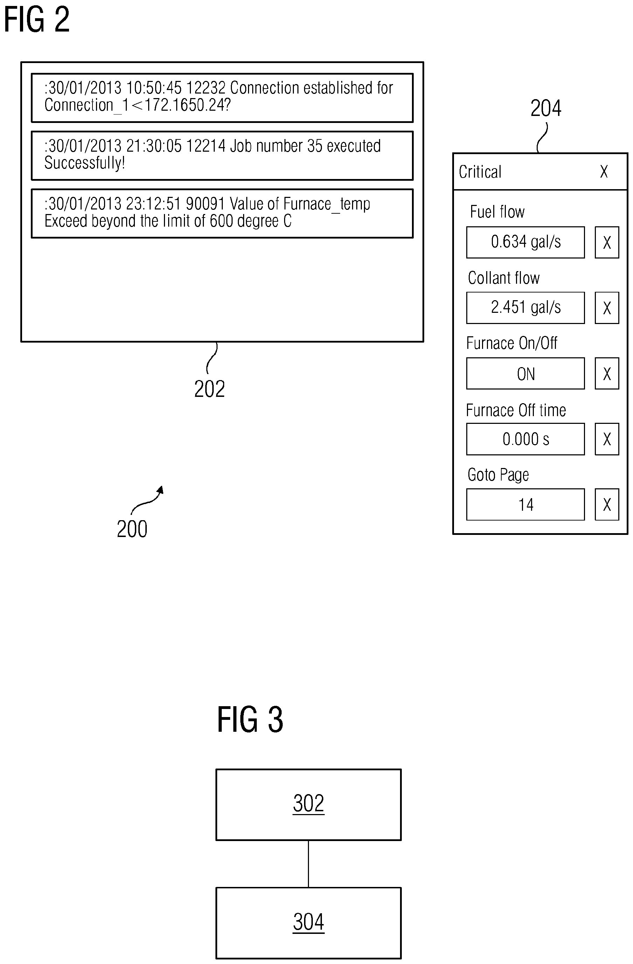

The alarm management system 100 receives the alarm messages generated in the control system and among other things, displays the alarm messages in an alarm display interface (such as that shown in FIG 2) displayed on a human-machine interface device such that an operator may take appropriate actions in response to the alarm messages.

As mentioned earlier, in accordance with the inventive techniques of the present invention, the alarm management system 100 includes the correlation module 102 and the rendering module 104.

The correlation module 102 is configured for maintaining a remedial parameter map corresponding to at least one alarm code, the remedial parameter map being a set of control parameters. Thus, each alarm code configured in the control system is associated with a set control parameters that may need to be altered in order to remediate an alarm condition.

In an exemplary embodiment of the present invention, the remediation parameter map may be manually configured by an administrator or the like during initial configuration of the alarm management system 100. Such manual configuration may be carried out, for example, in an engineering station / a configuration terminal used to design and develop a runtime application for the control system and subsequently, deployed on a target human-machine interface device. The techniques related to design/development of runtime application are generally well known in the art and are not being described in detail for sake of brevity.

Alternatively, the remediation parameter map may be automatically generated during operation according to a self-learning paradigm based on actual actions performed by an operator during operation. This aspect of the present invention will be further explained a little later in the present description.

In one exemplary embodiment of the present invention, the remediation parameter map is initialized and maintained only for selected alarm codes such as those which are regarded as time critical.

The rendering module 104 is configured for receiving at least one alarm message from the control system, and rendering the alarm message in the alarm display interface. In accordance with techniques of the present invention, the remediation parameter map corresponding to the relevant alarm code is bundled along with the alarm message before being provided to the rendering module 104 for rendering.

According to a key technical aspect of the present invention, the remediation parameter map is rendered such that the control parameters included therein are directly editable by an operator through the alarm display interface.

Referring now to FIG 2, an exemplary alarm display interface 200 is shown in accordance with an embodiment of the present invention.

The alarm display interface 200 has a main window 202 configured to display one or more alarms that are currently active (that is to say that the alarm was generated in the control system earlier and is still not resolved/addressed by an operator) .

For each alarm listed in the main window 200, the operator may provided a user input, such as clicking on the alarm in the window and so on, such that a corresponding remediation parameter map is displayed in a pop-up window 204.

As can be visualized from FIG 2, when a suitable user input is provided to access the remediation parameter map corresponding to the alarm message "*Value of furnace temperature exceeds beyond the limit of 600 degree C*" through the alarm display interface 200, the pop-up window 204 opens up and the operator is able to see various control parameters that may be altered to remediate the alarm condition. The list of such control parameters includes "*Fuel Flow*", "*Coolant Flow*", "*Furnace ON*/*OFF*", and so on. As can also be seen, the pop-up window 204 provides suitable input means to alter the control parameters in a desirable manner to remediate the alarm condition.

It should be noted that FIG 2 provides only an exemplary alarm display interface.

In an alternative embodiment of the present invention, the remedial parameter map is directly displayed along with the alarm message. Thus, in this embodiment, there is no main window and pop-up window; instead, there is just one alarm display interface within which alarm message as well as the list of control parameters is included within the corresponding remediation parameter map are displayed.

For convenience of the operator, suitable techniques for contracting or expanding the alarm message could be provided. Thus, in the contracted view, only the alarm message is visible, the operator may click on the alarm message whereby the alarm message is expanded to additionally display the list of control parameters included in the remediation parameter map.

Thus, in various alternative embodiments of the present invention, the remediation parameter map may be directly displayed along with the alarm message or may be displayed embedded in the same window (as that of the alarm message) or an additional (pop-up) window only after receiving a user input therefor.

In each of these alternative embodiments, the operator is able to alter values assigned to the control parameters in a required manner through the alarm display interface. When the control parameters included in the remediation parameter map are displayed in the alarm display interface 200, the corresponding current values are also fetched and displayed in the alarm display interface 200. The operator can alter the values of the control parameters in a desired manner. Thus, the operator does not need to navigate through a myriad of user interfaces otherwise provided in the human-machine interface device associated with the control system.

Referring back to FIG 1, as mentioned earlier, the alarm management system 100 also includes tracking module 106. It should be noted that tracking module 106 is an optional module that helps to dynamically update the remediation parameter map based on actual actions of an operator while remediating an alarm condition, as will now be explained.

The tracking module 106 is configured for tracking one or more control parameters that are altered in response to the alarm message. The tracking module 106 is further configured for dynamically updating the remedial parameter map corresponding to the alarm code associated therewith.

Thus, during remediation of an alarm condition, the operator may alter one or more control parameters. The operator has the freedom to alter not only the control parameters available through the remediation parameter map but also through any other user interface configured in the human-machine interface device associated with the control system. The tracking module 106 tracks all such control parameters that are altered in response to an alarm message.

In case the tracking module 106 is included in the alarm management system 100, it is possible to initiate each alarm code with a blank remediation parameter map. Over a period of time, as the operator resolves alarm messages generated in the control system, the corresponding remediation parameter map keeps getting updated with relevant set of control parameters.

According a particularly advantageous embodiment of the present invention, each control parameter within the remedial parameter map is associated with an assigned weight. The assigned weight is indicative of a usage frequency of corresponding control parameter in resolving one or more previous alarm messages corresponding to an individual alarm code.

When a control parameter is used by an operator in response to an alarm message with a particular alarm code for the first time, the control parameter is added to the remediation parameter map with a default assigned weight. Over a period of time, as the particular control parameter is used (or not used) while remediating alarm messages with that particular alarm code, the assigned weight of the control parameter in the relevant remediation parameter map is increased (or decreased) in a preconfigured manner. For example, a new control parameter may be added to the remediation parameter map of a particular alarm code with a default assigned weight of 10. In every subsequent occurrence of an alarm message with that particular alarm code, if the given control parameter is altered, the corresponding assigned weight is increased by 1, otherwise, the assigned weight is decreased by 1.

In accordance with an exemplary embodiment of the present invention, the set of control parameters in the remedial parameter map are sorted based on corresponding assigned weights.

Several additional advantageous technical features may also be provided. For example, the alarm management system 100 may be configured such that when the assigned weight of the control parameter in a given remediation parameter map reduces to a minimum boundary value, the control parameter is removed from the given remediation parameter map. Thus, the remediation parameter map corresponding to any given alarm code remains dynamically updated based on actual actions performed by an operator while remediating a corresponding alarm message.

In one exemplary embodiment of the present invention, the dynamic update of the remediation parameter map associated with alarm codes may be disabled. In this embodiment, the operator manually configures the relevant control parameters. Thus, the remediation parameter map corresponding to an alarm code is static and no change/refining is affected on the remediation parameter map. The "static" remediation parameter map according to this embodiment is particularly useful when one or more domain experts are available for initial configuration of the alarm management system 100.

Referring now to FIG 3, a brief flowchart showing a method for alarm management is provided.

The method is suitable for use in a control system as described in the preceding description. Thus, the control system is configured for regulating one or more control parameters corresponding to at least one controlled system and/or controlled process in a technical installation. The control system is further configured for generating one or more alarm messages, wherein each alarm message is assigned an alarm code selected from a set of predefined alarm codes.

According to the method of the present invention, initially, at step 302, a remedial parameter map is generated and maintained corresponding to at least one alarm code. As already understood from the preceding description, the remedial parameter map is a set of control parameters.

In an exemplary embodiment of the present invention, the remediation parameter map may be manually configured by an administrator or the like during initial configuration of the alarm management system. Such manual configuration may be carried out, for example, in an engineering station / a configuration terminal used to design and develop a runtime application for the control system and subsequently, deployed on a target human-machine interface device. The techniques related to design/development of runtime application are generally well known in the art and are not being described in detail for sake of brevity.

In an alternative embodiment of the present invention, the remediation parameter map may be initialized as a null set, that is to say that no control parameters are added to the remediation parameter map. It is only during routine operation that the remediation parameter map starts getting populated with one or more control parameters based on actual actions of an operator in response to an alarm message.

At step 304, at least one alarm message from the control system is received and rendered, along with a corresponding remedial parameter map, in an alarm display interface.

According to various exemplary embodiments of the present invention, the remedial parameter map is rendered such that each of the control parameters therein is editable based on a user input therefor provided through the alarm display interface.

Various alternatives are available for rendering the remediation parameter map along with the alarm message. In one implementation, the remedial parameter map is directly displayed along with the alarm message. In alternative implementations, the remedial parameter map is displayed based on a user input therefor provided through the alarm display interface.

According to an optional technical feature of the present invention, one or more control parameters that are altered in response to the alarm message are tracked, and the remedial parameter map corresponding to the alarm code associated therewith are dynamically updated.

In a further embodiment of the present invention, each control parameter within the remedial parameter map is associated with an assigned weight. The assigned weight is indicative of a usage frequency of corresponding control parameter in resolving one or more previous alarm messages corresponding to an individual alarm code. Thus, while tracking and dynamically updating the remediation parameter map, not only the control parameters themselves may be added or removed but the assigned weights thereof are also altered.

In case the control parameters are associated with the assigned weights, the set of control parameters in the remedial parameter map are sorted based on corresponding assigned weights while rendering the remedial parameter map along with the alarm message in the alarm display interface.

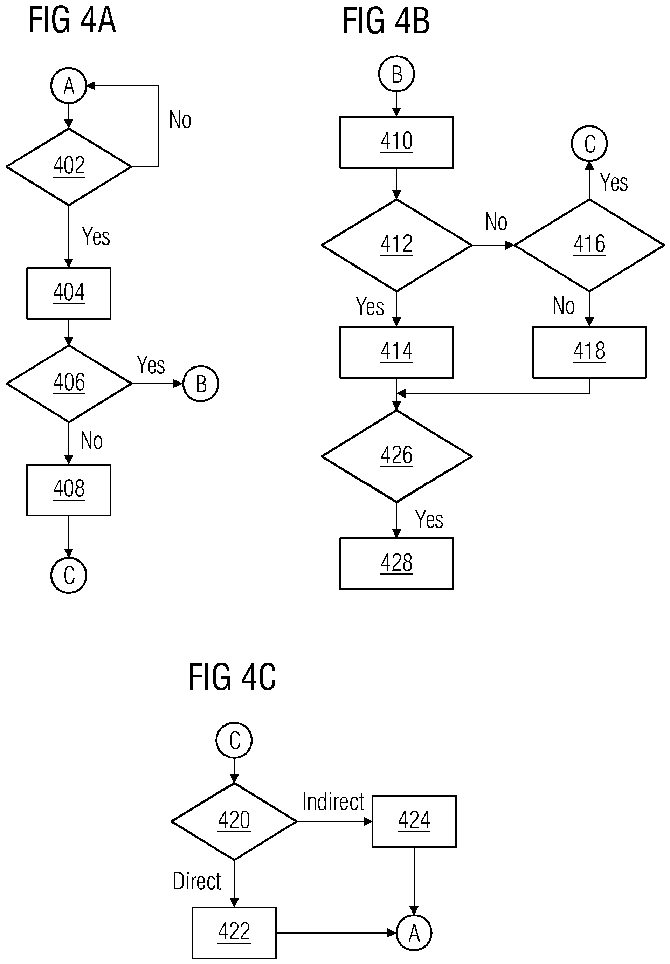

The working principle of the present invention in an exemplary embodiment thereof will further be explained now with reference to FIGS 4A through 4C.

Referring now to FIGS 4A through 4C, a detailed flowchart for a method for alarm management is shown in accordance with an exemplary embodiment of the present invention.

The detailed flowchart is split into three sections shown respectively in FIGS 4A through 4C. Each section has a distinct entry point. The section shown in FIG 4A has a entry point labeled as "A". Similarly, the sections shown in FIG 4B and FIG 4C have corresponding entry points labeled as "B" and "C" respectively.

At step 402, it is determined if an alarm message is available to be displayed in the alarm display interface. This determination is continuously made during normal operation of the control system in which the alarm management system of the present invention is being used.

At step 404, as soon as alarm message is available, the processing thereof is initiated.

At step 406, an alarm code of the alarm message is identified and it is determined if a corresponding remedial parameter map is available. If at step 406, a remedial parameter map is available, then, the control logic is passed to "B". Alternatively, if a remedial parameter map is not available, the alarm management system initiates a blank remedial parameter map at step 408, and thereafter, the control logic is passed to "C".

At step 410, the alarm message along with the remedial parameter map is rendered through the alarm display interface. The step 410 is followed by operator actions, which are not indicated in the flowchart. At step 412, it is determined if the control parameters in the remedial parameter map are modified. If so, then at step 414, the assigned weight of the control parameter is incremented by a predefined value. On the other hand, at step 412, it is determined that the control parameters in the remedial parameter map were not modified, then at step 416, it is determined if the operator modified certain control parameters not included in the remedial parameter map. If the control parameter included in the remedial parameter map is not modified, then, at step 418, the assigned weight of the control parameter is decremented by a predefined value. On the other hand, if at step 416, it is determined that the operator altered some control parameters not included in the remedial parameter map of the given alarm code, then, the control logic is passed to "C".

At step 420, it is determined if the new control parameter was altered directly or indirectly. If the control parameter was directly altered, then, the control parameter is added to the remedial parameter map with a first value of the assigned weight at step 422. On the other hand, if the control parameter was indirectly altered, then, the control parameter is added to the remedial parameter map with a second value of the assigned weight at step 424. Accordingly to techniques of the present invention, the first value of the assigned weight is higher than the second value of the assigned weight; that is to say, that a control parameter which is directly modified by an operator while remediating an alarm condition is provided a higher assigned weight compared to a control parameter that is indirectly modified.

At step 426, it is determined if the alarm message has been duly addressed by the operator. If not, then the control logic is passed back to step 412. On the other hand, if the alarm message is already duly addressed, then the remedial parameter map is duly updated and the alarm message is removed from the alarm display interface at step 428.

The present invention will now be explained with reference to an illustrative example below.

Consider a scenario in an industrial plant where temperature of a furnace needs to be maintained between predefined boundaries. Whenever the temperature of the furnace goes beyond the boundary conditions, an alarm message is raised.

In the current example, let us assume that the temperature of furnace is controlled by the following factors, adjusting the fuel flow rate (control-parameter associated to it being "*Fuel Flow*"), adjusting the coolant flow rate (control-parameter associated to it being "*Coolant Flow*"), turning on/off the furnace (control-parameters associated to it being "*Furnace ON*/*OFF"* and *"Furnace OFF-time*").

In accordance with the state-of-the-art, an operator first navigates to user interface "X" configured in the human-machine interface device to control the "*Fuel Flow*". Subsequently, the operator navigates to other user interfaces within the human-machine interface device to regulate other control parameters as identified above. This is evidently a time consuming process; not to mention requires a priori information about "which" control parameters should be acted upon and also, "where" those control parameters are available in the human-machine interface device.

According to the techniques of the present invention, when the operator modifies a control-parameter in response to an alarm message for the first time, an assigned weight of 10 is assigned to the control parameter within the remedial parameter map for the alarm code corresponding to the alarm message. Whenever an alarm message corresponding to the same alarm code occurs again, then the assigned weights for each control-parameter is incremented by one only if the operator modifies it and is decremented by one if the operator does not modify the same. When the assigned weight of a control-parameter reaches zero, then the specific control parameters is removed from the remedial parameter map corresponding the given alarm code.

Hence, over a period of time, only the relevant control parameters remain in the remedial parameter map for any given alarm code. This allows the operator to take appropriate actions on relevant control parameters in a time efficient manner.

The remedial parameter map is sorted every time based on assigned weights of the control parameters included therein, that is, the greater the assigned weight of a given control parameter, the higher the control-parameter is displayed in the list of control parameters in the remedial parameter map. This mechanism allows the operator to take quick action by first altering the control parameters when responding to an alarm message. Over a period of time, only the frequently used relevant control-parameter will remain in remedial parameter map. Thus, the remedial parameter map, serves to act means for providing recommendations to the operator as to which control parameters should preferably be acted upon to address an alarm condition in the plant. Such recommendation system is highly desirable, especially with a view to reduce the time required for imparting desired knowledge to newly recruited operators before they are able to work independently in the field.

In accordance with a technical aspect of the present invention, the operator is given an option to remove any particular control-parameter from the remedial parameter map manually when so desired. Through this technical feature, the assigned weight of the given control parameter is set to zero and therefore, it is removed from the remedial parameter map corresponding to the given alarm code.

When the operator directly modifies a control parameter, then the assigned weight of the control parameter is set to 10, for example. On the other hand, if the control parameter is indirectly modified through some other control parameter (such as a button click or some other manner) then, the assigned weight is set to 5, for example. Thus, a control parameter which is directly modified is assigned a higher assigned weight as compared to a control parameter which is indirectly modified. If the operator removes one of the control parameter from the pop-up window, the assigned weight of that control parameter is set to 0, for example, and it is removed from the remedial parameter map of the corresponding alarm code.

Thus, the present invention provides an alarm management system and a method therefor such that various alarm conditions occurring in a control system are duly addressed in a time-efficient and convenient manner. Further, the dependence on training and skill development of individual operators is reduced.

The present invention offers several advantages over prior art techniques. In particular, the time required to act on various alarm conditions is significantly reduced, thereby leading to more efficient and trouble-free operation of the corresponding technical installation. The alarm management system of the present invention acts in a self-learning mode wherein the operator actions are continuously tracked and remediation parameter map corresponding individual alarm codes are refined over time. This helps in reducing the dependence on training and skill development of the newly recruited operators since the alarm management system doubles up as recommendation system providing indications as to which control parameters should be altered in order to address any given alarm message. The option for manual configuration of remediation parameter map helps to document the knowledge of domain experts for training of newly appointed operators.

The present invention can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums in and of themselves as signal carriers are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk, Current examples of optical disks include compact disk--read only memory (CD-ROM), compact disk--read/write (CD-R/W) and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A system comprising an alarm management system (100) and a control system, said control system being configured for regulating one or more control parameters corresponding to at least one controlled system and/or controlled process in a technical installation, said control system being further configured for generating one or more alarm messages, wherein each alarm message is assigned an alarm code selected from a set of predefined alarm codes, said system being **characterized in that** said alarm management system (100) comprises:
- a correlation module (102), said correlation module (102) configured for maintaining a remedial parameter map corresponding to at least one alarm code, said remedial parameter map being a set of control parameters that should be acted on to remediate the alarm condition, and
- a rendering module (104), said rendering module(104)configured for receiving at least one alarm message from said control system, and rendering said alarm message, along with a corresponding remedial parameter map with a set of control parameters that should be acted on to remediate the alarm condition based on said alarm code thereof, in an alarm display interface (200) in such a manner that each of the set of control parameters that need to be regulated to remediate the alarm condition is editable through said alarm display interface (200) .

2. The alarm management system (100) according to claim 1, wherein said remedial parameter map is directly displayed along with said alarm message.

3. The alarm management system (100) according to claim 1 or 2, wherein said remedial parameter map is displayed based on a user input therefor provided through said alarm display interface (200).

4. The alarm management system (100) according to any of the preceding claims further comprising a tracking module (106), said tracking module (106) configured for tracking one or more control parameters that are altered in response to said alarm message, and said the tracking module is configured for dynamically updating said remedial parameter map corresponding to said alarm code associated therewith with a relevant set of control parameters.

5. The alarm management system (100) according to claim 4, wherein each control parameter within said remedial parameter map is associated with an assigned weight, said assigned weight being indicative of a usage frequency of corresponding control parameter in resolving one or more previous alarm messages corresponding to an individual alarm code.

6. The alarm management system (100) according to claim 5, wherein said set of control parameters in said remedial parameter map are sorted based on corresponding assigned weights.

7. The alarm management system (100) according to any of the preceding claims, wherein said remedial parameter map is manually configured.

8. A method for alarm management suitable for use in a control system, said control system being configured for regulating one or more control parameters corresponding to at least one controlled system and/or controlled process in a technical installation, said control system being further configured for generating one or more alarm messages, wherein each alarm message is assigned an alarm code selected from a set of predefined alarm codes, said method being **characterized by**:
- maintaining (302) a remedial parameter map corresponding to at least one alarm code, said remedial parameter map being a set of control parameters that should be acted on to remediate the alarm condition, and
- receiving (304) at least one alarm message from said control system, and rendering said alarm message, along with a corresponding remedial parameter map with a set of control parameters that should be acted on to remediate the alarm condition based on said alarm code thereof, in an alarm display interface (200) in such a manner that each of the set of control parameters that need to be regulated to remediate the alarm condition is editable through said alarm display interface (200) .

9. The method according to claim 8, wherein said remedial parameter map is directly displayed along with said alarm message.

10. The method according to claim 8 or 9, wherein said remedial parameter map is displayed based on a user input therefor provided through said alarm display interface (200).

11. The method according to any of the preceding method claims further comprising tracking one or more control parameters that are altered in response to said alarm message, and dynamically updating said remedial parameter map corresponding to said alarm code associated therewith.

12. The method according to claim 11, wherein each control parameter within said remedial parameter map is associated with an assigned weight, said assigned weight being indicative of a usage frequency of corresponding control parameter in resolving one or more previous alarmmessages corresponding to an individual alarm code.

13. The method according to claim 12, wherein said set of control parameters in said remedial parameter map are sorted based on corresponding assigned weights.

14. The method according to any of the preceding method claims, wherein said remedial parameter map is manually configured.

## Patentansprüche

1. System, umfassend ein Alarmverwaltungssystem (100) und ein Steuersystem,
wobei das Steuersystem dafür ausgelegt ist, einen oder mehrere Steuerparameter zu regeln, die wenigstens einem gesteuerten System und/oder gesteuerten Prozess in einer technischen Installation entsprechen, wobei das Steuersystem ferner dafür ausgelegt ist, eine oder mehrere Alarmmeldungen zu erzeugen, wobei jeder Alarmmeldung ein Alarmcode zugewiesen wird, der aus einem Satz vordefinierter Alarmcodes ausgewählt wird, wobei das System **dadurch gekennzeichnet ist, dass** das Alarmverwaltungssystem (100) umfasst:
- ein Korrelationsmodul (102), wobei das Korrelationsmodul (102) dafür ausgelegt ist, eine Korrekturparameterkarte zu pflegen, die wenigstens einem Alarmcode entspricht, wobei die Korrekturparameterkarte ein Satz von Steuerparametern ist, die bearbeitet werden sollten, um die Alarmbedingung zu beheben, und
- ein Darstellungsmodul (104), wobei das Darstellungsmodul (104) dafür ausgelegt ist, wenigstens eine Alarmmeldung vom Steuersystem zu empfangen und die Alarmmeldung zusammen mit einer entsprechenden Korrekturparameterkarte mit einem Satz von Steuerparametern, die bearbeitet werden sollten, um die Alarmbedingung basierend auf dem Alarmcode davon zu beheben, auf einer Alarmanzeigeschnittstelle (200) in einer Weise darzustellen, dass jeder des Satzes von Steuerparametern, die reguliert werden müssen, um die Alarmbedingung zu beheben, über die Alarmanzeigeschnittstelle (200) bearbeitbar ist.

2. Alarmverwaltungssystem (100) gemäß Anspruch 1, wobei die Korrekturparameterkarte direkt zusammen mit der Alarmmeldung angezeigt wird.

3. Alarmverwaltungssystem (100) gemäß Anspruch 1 oder 2, wobei die Korrekturparameterkarte basierend auf einer Benutzereingabe dafür angezeigt wird, die über die Alarmanzeigeschnittstelle (200) bereitgestellt wird.

4. Alarmverwaltungssystem (100) gemäß einem der vorstehenden Ansprüche, ferner ein Verfolgungsmodul (106) umfassend, wobei das Verfolgungsmodul (106) dafür ausgelegt ist, einen oder mehrere Steuerparameter zu verfolgen, die in Reaktion auf die Alarmmeldung geändert werden, und das Verfolgungsmodul dafür ausgelegt ist, die Korrekturparameterkarte entsprechend dem damit verknüpften Alarmcode mit einem relevanten Satz von Steuerparametern dynamisch zu aktualisieren.

5. Alarmverwaltungssystem (100) gemäß Anspruch 4, wobei jeder Steuerparameter in der Korrekturparameterkarte mit einem zugewiesenen Gewicht verknüpft ist, wobei das zugewiesene Gewicht eine Verwendungshäufigkeit des entsprechenden Steuerparameters zum Beheben einer oder mehrerer vorheriger Alarmmeldungen anzeigt, die einem einzelnen Alarmcode entsprechen.

6. Alarmverwaltungssystem (100) gemäß Anspruch 5, wobei der Satz von Steuerparametern in der Korrekturparameterkarte basierend auf entsprechenden zugewiesenen Gewichten sortiert wird.

7. Alarmverwaltungssystem (100) gemäß einem der vorstehenden Ansprüche, wobei die Korrekturparameterkarte manuell konfiguriert wird.

8. Verfahren zur Alarmverwaltung, das zur Verwendung in einem Steuersystem geeignet ist, wobei das Steuersystem dafür ausgelegt ist, einen oder mehrere Steuerparameter zu regeln, die wenigstens einem gesteuerten System und/oder gesteuerten Prozess in einer technischen Installation entsprechen, wobei das Steuersystem ferner dafür ausgelegt ist, eine oder mehrere Alarmmeldungen zu erzeugen, wobei jeder Alarmmeldung ein Alarmcode zugewiesen wird, der aus einem Satz vordefinierter Alarmcodes ausgewählt wird, wobei das Verfahren **gekennzeichnet ist durch**:
- Pflegen (302) einer Korrekturparameterkarte, die wenigstens einem Alarmcode entspricht, wobei die Korrekturparameterkarte ein Satz von Steuerparametern ist, die bearbeitet werden sollten, um die Alarmbedingung zu beheben, und
- Empfangen (304) wenigstens einer Alarmmeldung vom Steuersystem und Darstellen der Alarmmeldung zusammen mit einer entsprechenden Korrekturparameterkarte mit einem Satz von Steuerparametern, die bearbeitet werden sollten, um die Alarmbedingung basierend auf dem Alarmcode davon zu beheben, auf einer Alarmanzeigeschnittstelle (200) in einer Weise, dass jeder des Satzes von Steuerparametern, die reguliert werden müssen, um die Alarmbedingung zu beheben, über die Alarmanzeigeschnittstelle (200) bearbeitbar ist.

9. Verfahren gemäß Anspruch 8, wobei die Korrekturparameterkarte direkt zusammen mit der Alarmmeldung angezeigt wird.

10. Verfahren gemäß Anspruch 8 oder 9, wobei die Korrekturparameterkarte basierend auf einer Benutzereingabe dafür angezeigt wird, die über die Alarmanzeigeschnittstelle (200) bereitgestellt wird.

11. Verfahren gemäß einem der vorstehenden Ansprüche, ferner umfassend das Verfolgen eines oder mehrerer Steuerparameter, die in Reaktion auf die Alarmmeldung geändert werden, und das dynamische Aktualisieren der Korrekturparameterkarte, die dem damit verknüpften Alarmcode entspricht.

12. Verfahren gemäß Anspruch 11, wobei jeder Steuerparameter in der Korrekturparameterkarte mit einem zugewiesenen Gewicht verknüpft ist, wobei das zugewiesene Gewicht eine Verwendungshäufigkeit des entsprechenden Steuerparameters zum Beheben einer oder mehrerer vorheriger Alarmmeldungen anzeigt, die einem einzelnen Alarmcode entsprechen.

13. Verfahren gemäß Anspruch 12, wobei der Satz von Steuerparametern in der Korrekturparameterkarte basierend auf entsprechenden zugewiesenen Gewichten sortiert wird.

14. Verfahren gemäß einem der vorstehenden Ansprüche, wobei die Korrekturparameterkarte manuell konfiguriert wird.

## Revendications

1. Système comprenant un système de gestion d'alarme (100) et un système de commande, ledit système de commande étant configuré pour réguler un ou plusieurs paramètres de commande correspondant à au moins un système commandé et/ou un processus commandé dans une installation technique, ledit système de commande étant configuré en outre pour générer un ou plusieurs messages d'alarme, dans lequel à chaque message d'alarme est assigné un code d'alarme sélectionné dans un ensemble de codes d'alarme prédéfinis, ledit système étant **caractérisé en ce que** ledit système de gestion d'alarme (100) comprend :
- un module de corrélation (102), ledit module de corrélation (102) étant configuré pour tenir à jour une carte de paramètres de résolution correspondant à au moins un code d'alarme, ladite carte de paramètres de résolution étant un ensemble de paramètres de commande sur lesquels il convient d'intervenir pour remédier à la condition d'alarme, et
- un module de rendu (104), ledit module de rendu (104) étant configuré pour recevoir au moins un message d'alarme depuis ledit système de commande, et rendre ledit message d'alarme, ainsi qu'une carte de paramètres de résolution correspondante avec un ensemble de paramètres de commande sur lesquels il convient d'intervenir pour remédier à la condition d'alarme en fonction dudit code d'alarme de celle-ci, dans une interface d'affichage d'alarme (200) de manière à ce que chacun de l'ensemble de paramètres de commande à réguler pour remédier à la condition d'alarme puisse être édité par le biais de ladite interface d'affichage d'alarme (200) .

2. Système de gestion d'alarme (100) selon la revendication 1, dans lequel ladite carte de paramètres de résolution est affichée directement avec ledit message d'alarme.

3. Système de gestion d'alarme (100) selon la revendication 1 ou 2, dans lequel ladite carte de paramètres de résolution est affichée en fonction d'une entrée d'utilisateur relative à celle-ci fournie par le biais de ladite interface d'affichage d'alarme (200).

4. Système de gestion d'alarme (100) selon l'une quelconque des revendications précédentes comprenant en outre un module de suivi (106), ledit module de suivi (106) étant configuré pour suivre un ou plusieurs paramètres de commande qui sont modifiés en réponse audit message d'alarme, et ledit module de suivi est configuré pour actualiser dynamiquement ladite carte de paramètres de résolution correspondant audit code d'alarme associé à celle-ci avec un ensemble pertinent de paramètres de commande.

5. Système de gestion d'alarme (100) selon la revendication 4, dans lequel chaque paramètre de commande dans ladite carte de paramètre de résolution est associé à un poids assigné, ledit poids assigné étant indicatif d'une fréquence d'usage d'un paramètre de commande correspondant dans la résolution d'un ou de plusieurs messages d'alarme antérieurs correspondant à un code d'alarme individuel.

6. Système de gestion d'alarme (100) selon la revendication 5, dans lequel ledit ensemble de paramètres de commande dans ladite carte de paramètres de résolution est ordonné en fonction de poids assignés correspondants.

7. Système de gestion d'alarme (100) selon l'une quelconque des revendications précédentes, dans lequel ladite carte de paramètres de résolution est configurée manuellement.

8. Procédé de gestion d'alarme pouvant être utilisé dans un système de commande, ledit système de commande étant configuré pour réguler un ou plusieurs paramètres de commande correspondant à au moins un système commandé et/ou un processus commandé dans une installation technique, ledit système de commande étant configuré en outre pour générer un ou plusieurs messages d'alarme, dans lequel à chaque message d'alarme est assigné un code d'alarme sélectionné dans un ensemble de codes d'alarme prédéfinis, ledit procédé étant **caractérisé par** :
- la tenue à jour (302) d'une carte de paramètres de résolution correspondant à au moins un code d'alarme, ladite carte de paramètres de résolution étant un ensemble de paramètres de commande sur lesquels il convient d'intervenir pour remédier à la condition d'alarme, et
- la réception (304) d'au moins un message d'alarme depuis ledit système de commande, et le rendu dudit message d'alarme, ainsi que d'une carte de paramètres de résolution correspondante avec un ensemble de paramètres de commande sur lesquels il convient d'intervenir pour remédier à la condition d'alarme en fonction dudit code d'alarme de celle-ci, dans une interface d'affichage d'alarme (200) de manière à ce que chacun de l'ensemble de paramètres de commande à réguler pour remédier à la condition d'alarme puisse être édité par le biais de ladite interface d'affichage d'alarme (200).

9. Procédé selon la revendication 8, dans lequel ladite carte de paramètres de résolution est affichée directement avec ledit message d'alarme.

10. Procédé (100) selon la revendication 8 ou 9, dans lequel ladite carte de paramètres de résolution est affichée en fonction d'une entrée d'utilisateur relative à celle-ci fournie par le biais de ladite interface d'affichage d'alarme (200) .

11. Procédé selon l'une quelconque des revendications de procédé précédentes comprenant en outre le suivi d'un ou de plusieurs paramètres de commande qui sont modifiés en réponse audit message d'alarme, et l'actualisation dynamique de ladite carte de paramètres de résolution correspondant audit code d'alarme associé à celle-ci.

12. Procédé selon la revendication 11, dans lequel chaque paramètre de commande dans ladite carte de paramètre de résolution est associé à un poids assigné, ledit poids assigné étant indicatif d'une fréquence d'usage d'un paramètre de commande correspondant dans la résolution d'un ou de plusieurs messages d'alarme antérieurs correspondant à un code d'alarme individuel.

13. Procédé selon la revendication 12, dans lequel ledit ensemble de paramètres de commande dans ladite carte de paramètres de résolution est ordonné en fonction de poids assignés correspondants.

14. Procédé selon l'une quelconque des revendications de procédé précédentes, dans lequel ladite carte de paramètres de résolution est configurée manuellement.
